# EUROPEAN PATENT APPLICATION

(11) **EP 3 348 654 A1**
(43) Date of publication of application: **18.07.2018**
(21) Application number: 16844556.7
(22) Date of filing: 07.06.2016
(51) Int. Cl.: C21B 13/00, C21B 13/14

(54) **APPARATUS FOR DECOMPOSING TAR, APPARATUS FOR PRODUCING MOLTEN IRON, AND METHOD FOR PRODUCING MOLTEN IRON**

(30) Priority: 08.09.2015 KR 20150127257
(71) Applicant: Posco, Pohang-si, Gyeongsangbuk-do 37859 (KR)
(72) Inventor: SHIN, Myoung Kyun, Pohang-si Gyeongsangbuk-do 37859 (KR); KO, Chang Kuk, Pohang-si Gyeongsangbuk-do 37859 (KR); CHO, Min Young, Pohang-si Gyeongsangbuk-do 37859 (KR)
(74) Representative: Zech, Stefan Markus
(86) International application number: PCT/KR2016/005997
(87) International publication number: WO 2017/043736

(57) **Abstract**

An apparatus for manufacturing molten iron according to an exemplary embodiment of the present invention includes: one or more reducing furnaces which manufacture reduced iron by reducing ore; an input device which inputs coal and the reduced iron discharged from the reducing furnace into a melting and gasifying furnace; the melting and gasifying furnace which combusts the coal supplied from the input device by using oxygen, and melts the reduced iron by using combustion heat to manufacture molten iron; and a tar decomposition furnace which is connected to the melting and gasifying furnace, and decomposes a tar component included in gas discharged from the melting and gasifying furnace.

## Description

### [Technical Field]

The present invention relates to an apparatus and a method for manufacturing molten iron.

### [Background Art]

Because a blast furnace process for producing molten iron causes a lot of problems such as environmental pollution, researches are being conducted on a direct iron ore smelting reduction process which is to be substituted for the blast furnace process. The direct iron ore smelting reduction process manufactures molten iron by directly using coal as fuel and a reducing agent and directly using iron ore as an iron source.

The molten iron is manufactured by inputting the reduced iron ore and the coal into a melting and gasifying furnace and melting the reduced iron ore. A reducing furnace is used to reduce iron ore. The iron ore comes into contact with reducing gas blown into the reducing furnace while flowing in the reducing furnace. Therefore, the iron ore is converted into reduced iron and then discharged from the reducing furnace. The reduced iron discharged from the reducing furnace is inputted into the melting and gasifying furnace.

Meanwhile, tar, which is produced during a process of manufacturing molten iron, is hydrocarbon in which carbon and hydrogen are complicatedly bonded in the form of a chain or a benzene ring, and the amount of tar is about 15 to 20% of the amount of coal inputted into the melting and gasifying furnace. If the tar remains as it is, the amount of reducing gas, which is produced in the melting and gasifying furnace and supplied into the reducing furnace, is insufficient, and as a result, it is necessary to decompose most of the tar into reducing gas such as CO, H₂, and CH_{4.}

In a case in which the melting and gasifying furnace is configured to decompose the tar therein, a dome space having a significant volume needs to be provided at an upper side of the melting and gasifying furnace, and a large amount of oxygen for combustion needs to be used to ensure a temperature of the dome space. In addition, a gas cooling and circulating device needs to be provided to adjust a temperature of the reducing gas to be supplied to the connected reducing furnace, and as a result, there is a problem in that a significant loss of energy occurs.

### [DISCLOSURE]

### [Technical Problem]

The present invention has been made in an effort to provide an apparatus for decomposing tar and an apparatus and a method for manufacturing molten iron, which are capable of reducing a size of a melting and gasifying furnace for manufacturing molten iron, reducing a loss of coal and energy, and increasing the amount of produced gas, thereby improving economic feasibility.

### [Technical Solution]

An exemplary embodiment of the present invention provides an apparatus for manufacturing molten iron, the apparatus including: one or more reducing furnaces which manufacture reduced iron by reducing ore; an input device which inputs coal and the reduced iron discharged from the reducing furnace into a melting and gasifying furnace; the melting and gasifying furnace which combusts the coal supplied from the input device by using oxygen, and melts the reduced iron by using combustion heat to manufacture molten iron; and a tar decomposition furnace which is connected to the melting and gasifying furnace, and decomposes a tar component included in gas discharged from the melting and gasifying furnace.

The apparatus may include a uniform-pressure input device which is connected to the tar decomposition furnace and inputs high-temperature reduced iron or high-temperature reduced agglomerates into the tar decomposition furnace.

The apparatus may include a partial combustion furnace which combusts a part of gas discharged from the melting and gasifying furnace, and inputs the gas into the tar decomposition furnace.

The apparatus may include: an oxygen blowing conduit which blows oxygen into the partial combustion furnace; and a steam blowing conduit which blows steam into the partial combustion furnace.

The apparatus may include an exhaust heat boiler which is connected to the steam blowing conduit, and manufactures the steam by using sensible heat of exhaust gas discharged from the reducing furnace.

The apparatus may include a uniform-pressure discharge device which is connected to the tar decomposition furnace, and discharges high-temperature reduced iron or high-temperature reduced agglomerates from the tar decomposition furnace.

The tar decomposition furnace may include therein a filling layer which is formed of the high-temperature reduced iron or the high-temperature reduced agglomerates inputted by the uniform-pressure input device.

The apparatus may include a partial combustion furnace which combusts a part of gas discharged from the melting and gasifying furnace, and inputs the gas into the tar decomposition furnace.

The apparatus may include: an oxygen blowing conduit which blows oxygen into the partial combustion furnace; and a steam blowing conduit which blows steam into the partial combustion furnace.

The apparatus may include an exhaust heat boiler which manufactures the steam by using sensible heat of exhaust gas discharged from the reducing furnace, and is connected to the steam blowing conduit.

The apparatus may include a uniform-pressure discharge device which is connected to the tar decomposition furnace, and discharges high-temperature reduced iron or high-temperature reduced agglomerates from the tar decomposition furnace.

The tar decomposition furnace may include therein a filling layer which is formed of the high-temperature reduced iron or the high-temperature reduced agglomerates inputted by the uniform-pressure input device.

The apparatus may include a uniform-pressure discharge device which is connected to the tar decomposition furnace, and discharges high-temperature reduced iron or high-temperature reduced agglomerates from the tar decomposition furnace.

The tar decomposition furnace may include therein a filling layer which is formed of the high-temperature reduced iron or the high-temperature reduced agglomerates inputted by the uniform-pressure input device.

The apparatus may include: a high-temperature cyclone which separates dust in gas discharged from the melting and gasifying furnace; and a gas conduit which inputs the gas, from which the dust is separated, into the partial combustion furnace.

The apparatus may include a differential pressure meter which is connected to the tar decomposition furnace to monitor a level of pores in the filling layer.

The apparatus may include a cooling device which cools the high-temperature reduced iron discharged from the tar decomposition furnace.

The apparatus may further include: a high-temperature agglomeration device which agglomerates reduced iron discharged from the reducing furnace; and a conveying device which conveys high-temperature reduced agglomerates, which are agglomerated by the high-temperature agglomeration device, to the input device.

Another exemplary embodiment of the present invention provides an apparatus for decomposing tar, the apparatus including: a tar decomposition furnace which includes therein a filling layer formed of high-temperature reduced iron or high-temperature reduced agglomerates, and decomposes a tar component; a uniform-pressure input device which is connected to the tar decomposition furnace, and inputs the high-temperature reduced iron or the high-temperature reduced agglomerates into the tar decomposition furnace; a partial combustion furnace which combusts a part of gas, and inputs the gas into the tar decomposition furnace; and a uniform-pressure discharge device which is connected to the tar decomposition furnace, and discharges high-temperature reduced iron or high-temperature reduced agglomerates from the tar decomposition furnace.

The apparatus may further include: an oxygen blowing conduit which blows oxygen into the partial combustion furnace; and a steam blowing conduit which blows steam into the partial combustion furnace.

The apparatus may further include an exhaust heat boiler which is connected to the steam blowing conduit, and manufactures the steam by using sensible heat of exhaust gas.

Still another exemplary embodiment of the present invention provides a method of manufacturing molten iron, the method including: manufacturing reduced iron by inputting ore into one or more reducing furnaces; inputting the reduced iron and coal into a melting and gasifying furnace; manufacturing molten iron by combusting the coal with oxygen and melting the reduced iron with combustion heat; inputting gas discharged from the melting and gasifying furnace into a tar decomposition furnace; and decomposing a tar component included in the gas in the tar decomposition furnace.

The decomposing of the tar component may include: inputting the reduced iron discharged from the reducing furnace and forming a reduced iron filling layer in the tar decomposition furnace; and effectively decomposing a tar component contained in the gas into reducing gas components by inputting the gas discharged from the melting and gasifying furnace and allowing the gas to pass through the reduced iron filling layer.

A constant volume of the reduced iron filling layer may be maintained as an equal amount of reduced iron is continuously supplied into and discharged from the tar decomposition furnace.

The method may further include combusting, in a partial combustion furnace, a part of the gas discharged from the melting and gasifying furnace before the inputting of the gas into the tar decomposition furnace.

The method may further include: blowing oxygen into the partial combustion furnace through an oxygen blowing conduit before the combusting of the part of the gas in the partial combustion furnace; and blowing steam into the partial combustion furnace through a steam blowing conduit.

The method may include adjusting a ratio of oxygen and steam blown into the partial combustion furnace provided in the tar decomposition furnace so that the reducing gas, which is discharged from the tar decomposition furnace when the decomposition of tar is completed, is maintained at a temperature of 700 to 800°C.

The steam in the blowing of the steam may be manufactured, by an exhaust heat boiler, by using sensible heat of exhaust gas discharged from the reducing furnace.

The decomposing of the tar component may include discharging high-temperature reduced iron or high-temperature reduced agglomerates from the tar decomposition furnace by a uniform-pressure discharge device.

The method may include cooling the high-temperature reduced iron discharged from the tar decomposition furnace by a cooling device and inputting the cooled high-temperature reduced iron back into the reducing furnace.

The method may further include: separating dust in high-temperature reducing gas, which is discharged from the melting and gasifying furnace, by a high-temperature cyclone connected to the melting and gasifying furnace; and inputting the dust, which is separated by the high-temperature cyclone, back into the melting and gasifying furnace by a dust burner connected to the melting and gasifying furnace.

The method may further include supplying a part of the high-temperature reducing gas into the reducing furnace and discharging the remaining part of the high-temperature reducing gas to the outside in order to maintain a pressure in the melting and gasifying furnace.

The method may further include: agglomerating reduced iron, which is discharged from the reducing furnace, by a high-temperature agglomeration device connected to the reducing furnace after the manufacturing of the reduced iron; and conveying high-temperature reduced agglomerates agglomerated by the high-temperature agglomeration device to the melting and gasifying furnace by a conveying device.

### [Advantageous Effects]

According to the present invention, it is possible to reduce a size of the melting and gasifying furnace for manufacturing molten iron, reduce a loss of coal and energy, increase the amount of produced gas, thereby improving economic feasibility.

### [Description of the Drawings]

FIG. 1 is a view schematically illustrating an apparatus for decomposing tar according to an exemplary embodiment of the present invention.
FIG. 2 is a view schematically illustrating an apparatus for manufacturing molten iron which is provided with the apparatus for decomposing tar according to the exemplary embodiment of the present invention.
FIG. 3 is a view schematically illustrating the apparatus for manufacturing molten iron which is provided with the apparatus for decomposing tar according to the exemplary embodiment of the present invention.
FIG. 4 is a view illustrating an experimental result of measuring the amount of gas, a change in temperature, and a change in composition at front and rear ends of the apparatus for decomposing tar according to the exemplary embodiment of the present invention.

### [Mode for Invention]

Hereinafter, exemplary embodiments of the present invention will be described in detail with reference to the accompanying drawings so that those skilled in the technical field to which the present invention pertains may easily carry out the exemplary embodiments. The present invention may be implemented in various different ways, and is not limited to the exemplary embodiments described herein.

A part irrelevant to the description will be omitted to clearly describe the present invention, and the same or similar constituent elements will be designated by the same reference numerals throughout the specification.

In addition, each configuration illustrated in the drawings is arbitrarily shown for understanding and ease of description, but the present invention is not limited thereto. In the drawings, some portions are enlarged for clear expressions.

In addition, unless explicitly described to the contrary, the word "comprise" and variations such as "comprises" or "comprising", will be understood to imply the inclusion of stated elements but not the exclusion of any other elements.

Then, an apparatus for decomposing tar according to an exemplary embodiment of the present invention will be described in detail with reference to the drawings.

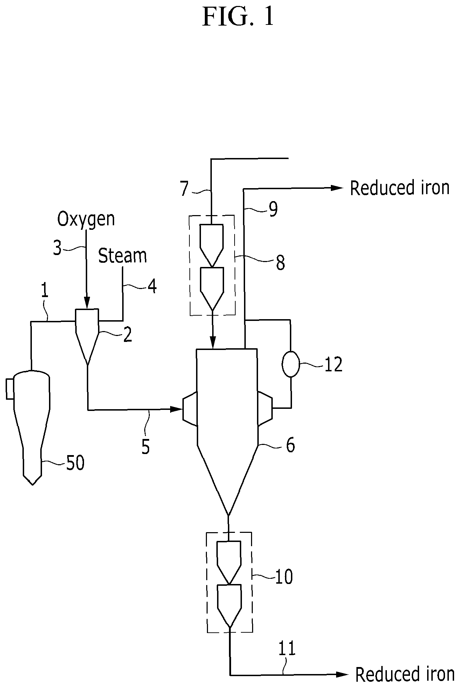

FIG. 1 is a view schematically illustrating an apparatus for decomposing tar according to an exemplary embodiment of the present invention.

Gas, which is inputted into a high-temperature cyclone 50, is separated from dust at a rear end of the high-temperature cyclone 50, and the gas separated from the dust is inputted into a partial combustion furnace 2 through a gas conduit 1. The partial combustion furnace 2 is provided with an oxygen blowing conduit 3 and a steam blowing conduit 4, and oxygen and steam are blown into the partial combustion furnace 2 through the oxygen blowing conduit 3 and the steam blowing conduit 4, such that a part of the gas inputted into the partial combustion furnace 2 is combusted by the oxygen, and also mixed with the steam. The gas, which is partially combusted by the oxygen and mixed with the steam, is inputted into a tar decomposition furnace 6 from a lower side of the tar decomposition furnace 6 through a gas conduit 5.

A high-temperature reduced iron conveying device 7 and a uniform-pressure input device 8 connected therewith are provided at an upper side of the tar decomposition furnace 6 so that high-temperature reduced iron may be inputted into the tar decomposition furnace 6 from a normal-pressure place to a high-pressure place, such that the high-temperature reduced iron is supplied into the tar decomposition furnace 6 so that a high-temperature reduced iron filling layer is formed in the tar decomposition furnace 6.

The gas, which is inputted into the lower side of the tar decomposition furnace 6, raises the high-temperature reduced iron filling layer, and in this process, a tar component included in the gas reacts with steam, CO₂, and the like and is decomposed into CO, H₂, CH₄, and the like by using the reduced iron as a catalyst. The gas in which the included tar is decomposed is discharged from the upper side of the tar decomposition furnace 6 through a gas conduit 9, the gas may be maintained at a temperature of about 700 to 800°C, and the temperature of the gas is adjusted by adjusting a ratio of oxygen and steam to be blown into the partial combustion furnace 2.

Meanwhile, pores of the reduced iron filling layer in the tar decomposition furnace 6 are clogged by a significant amount of carbon produced during the process of decomposing the tar and by dust included in the inputted gas, and a function of the reduced iron, which serves as a catalyst for decomposing tar, severely deteriorates if a degree to which the pores are clogged reaches a certain or higher level. To prevent the deterioration, at the lower side of the tar decomposition furnace 6, there are provided a first uniform-pressure discharge device 10 which may discharge the reduced iron in the reduced iron filling layer in the tar decomposition furnace 6 from a high-pressure place to a normal-pressure place, and a conveying device 11 which conveys the discharged high-temperature reduced iron.

The high-temperature reduced iron is supplied from the uniform-pressure input device 8 as much as the high-temperature reduced iron is discharged from the first uniform-pressure discharge device 10, such that the high-temperature reduced iron filling layer having a constant volume may be maintained in the tar decomposition furnace 6, and the pores may be constantly maintained in the high-temperature reduced iron filling layer. Meanwhile, a differential pressure meter 12 is provided at upper and lower sides of the tar decomposition furnace 6 in order to monitor a level of pores in the high-temperature reduced iron filling layer.

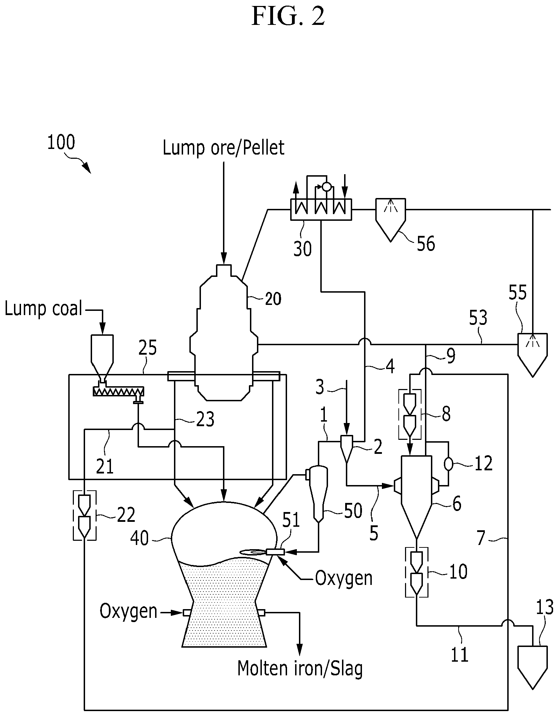

Next, an apparatus for manufacturing molten iron which is provided with the apparatus for decomposing tar according to the exemplary embodiment of the present invention will be described in detail with reference to FIG. 2. A detailed description of the constituent elements, which are identical to the constituent elements of the apparatus for decomposing tar according to the exemplary embodiment described with reference to FIG. 1, will be omitted.

FIG. 2 is a view schematically illustrating the apparatus for manufacturing molten iron which is provided with the apparatus for decomposing tar according to the exemplary embodiment of the present invention.

The apparatus for manufacturing molten iron illustrated in FIG. 2 may be configured by applying the apparatus for decomposing tar illustrated in FIG. 1.

The apparatus 100 for manufacturing molten iron includes a reducing furnace 20 which reduces lump ore, an input device 25 which inputs coal and reduced iron discharged from the reducing furnace, and a melting and gasifying furnace 40 which combusts the coal supplied from the input device 25 by using oxygen, and melts the reduced iron by using combustion heat to manufacture molten iron.

High-temperature reducing gas to be supplied into the reducing furnace 20 is manufactured in the melting and gasifying furnace 40. In addition, the high-temperature reducing gas discharged from the melting and gasifying furnace 40 passes through the high-temperature cyclone 50, and the gas inputted into the high-temperature cyclone 50 is separated from dust at a rear end of the high-temperature cyclone 50. The dust, which is separated by the high-temperature cyclone 50, is inputted back into the melting and gasifying furnace 40 by a dust burner 51.

An exhaust heat recovery boiler 30 is installed at a rear end of the reducing furnace 20 to produce steam by using sensible heat of exhaust gas discharged from an upper side of the reducing furnace 20 after the ore is reduced in the reducing furnace 20, and the steam is supplied into the partial combustion furnace 2 through the steam blowing conduit 4.

In addition, a part of the reduced iron is inputted to a reduced iron branch conduit 21 from an input conduit 23 through which the reduced iron is inputted into the melting and gasifying furnace 40 from the reducing furnace 20, and the part of the reduced iron is discharged by a second uniform-pressure discharge device 22. The reduced high-temperature reduced iron is conveyed to the uniform-pressure input device 8 at the upper side of the tar decomposition furnace 6 by the conveying device 7.

Meanwhile, the high-temperature reduced iron, which is discharged from the tar decomposition furnace 6 by the first uniform-pressure discharge device 10, is conveyed to a cooling device 13 by the conveying device 11, cooled to room temperature, inputted into the reducing furnace 20 together with lump ore, and then reused as a raw material for manufacturing molten iron.

In addition, the reducing gas discharged from the tar decomposition furnace 6 is maintained at a temperature of about 700 to 800°C, such that the reducing gas is supplied into the reducing furnace 20 through a reducing gas conduit 52 without being separately cooled, and a part of the reducing gas is inputted to a separate gas conduit 53 in order to maintain a constant pressure in the melting and gasifying furnace 40, and discharged to the outside after being cleaned and cooled by a first dust collecting device 55.

Exhaust gas, which is discharged from the upper side of the reducing furnace 20 after the ore is reduced, is cleaned and cooled while passing through a second dust collecting device 56, mixed with the gas discharged from a rear end of the first dust collecting device 55 in order to maintain a pressure in the melting and gasifying furnace 40, and then discharged to the outside from the apparatus for manufacturing molten iron.

As described above, a tar decomposition facility is configured outside the melting and gasifying furnace 40, such that the melting and gasifying furnace 40 of the apparatus for manufacturing molten iron according to the present invention may have a volume of about 30 to 40% of a volume of a dome portion of the melting and gasifying furnace 40 of an apparatus for manufacturing molten iron in which the tar decomposition facility is configured inside the melting and gasifying furnace 40. Therefore, the amount of oxygen for combustion, which is used to ensure a temperature of a dome space, is reduced, and it is possible to prevent a loss caused by a function of coal due to a high temperature in the dome space.

In addition, a cooling circulation line for controlling a temperature of the reducing gas is not required unlike the apparatus for manufacturing molten iron in which the tar decomposition facility is configured inside the melting and gasifying furnace 40, and as a result, it is possible to reduce costs required to manufacture the apparatus, and it is possible to prevent a loss of energy caused by cooling.

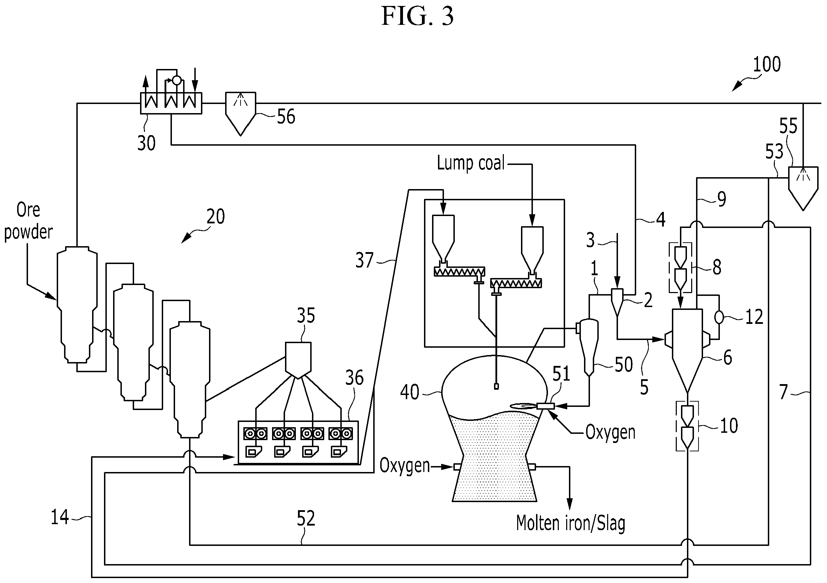

Next, an apparatus for manufacturing molten iron which is provided with the apparatus for decomposing tar according to the exemplary embodiment of the present invention will be described in detail with reference to FIG. 3. A detailed description of the constituent elements, which are identical to the constituent elements of the apparatus for decomposing tar according to the exemplary embodiment described with reference to FIG. 1, will be omitted.

FIG. 3 is a view schematically illustrating the apparatus for manufacturing molten iron which is provided with the apparatus for decomposing tar according to the exemplary embodiment of the present invention.

The apparatus for manufacturing molten iron illustrated in FIG. 3 may be configured by applying the apparatus for decomposing tar illustrated in FIG. 1.

An apparatus 100 for manufacturing molten iron includes a multi-stage reducing furnace 20 which reduces iron-containing ore powder, a high-temperature agglomeration device 36 which agglomerates reduced iron powder discharged from the multi-stage reducing furnace 20, a conveying device 37 which conveys high-temperature reduced agglomerates agglomerated by the high-temperature agglomeration device 36, an input device 25 which inputs coal and the high-temperature reduced agglomerates conveyed by the conveying device 37, and a melting and gasifying furnace 40 which combusts the coal supplied from the input device 25 by using oxygen, and melts the high-temperature reduced agglomerates by using combustion heat to manufacture molten iron.

Some high-temperature reduced agglomerates are separated from the high-temperature reduced agglomerates conveying device 37 and conveyed to the uniform-pressure input device 8 at the upper side of the tar decomposition furnace 6 by the conveying device 7. Meanwhile, the high-temperature reduced agglomerates, which are discharged from the tar decomposition furnace 6 by the first uniform-pressure discharge device 10, are conveyed by the conveying device 14, inputted into the melting and gasifying furnace 40 by the high-temperature reduced agglomerate conveying device 37, and then used as a raw manufacturing material.

In addition, the reducing gas discharged from the tar decomposition furnace 6 is maintained at a temperature of about 700 to 800°C, such that the reducing gas is supplied into the multi-stage reducing furnace 20 through the reducing gas conduit 52 without being separately cooled, and a part of the reducing gas is inputted to the separate gas conduit 53 in order to maintain a constant pressure in the melting and gasifying furnace 40, and discharged to the outside after being cleaned and cooled by the first dust collecting device 55.

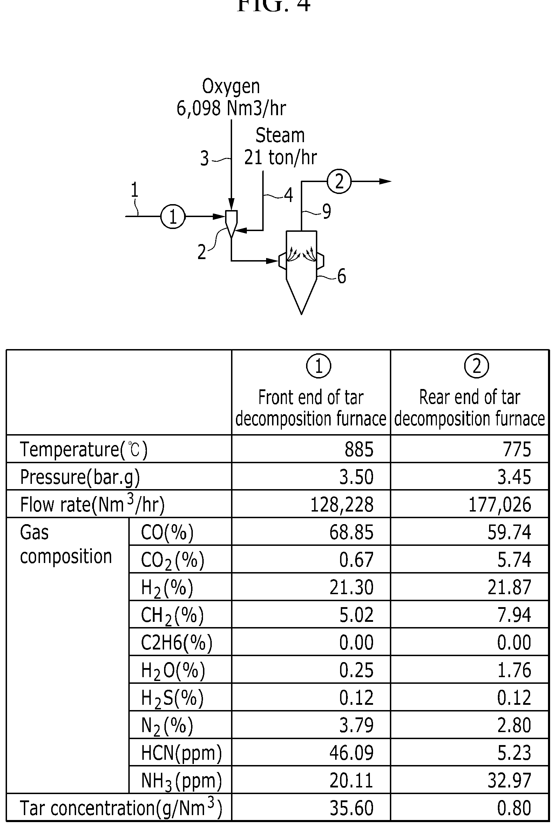

Hereinafter, an effect of the apparatus for decomposing tar according to the present invention will be described with reference to an example in which the apparatus for decomposing tar according to the present invention is applied to an apparatus for manufacturing 600,000 tons of molten iron per year by directly using coal. FIG. 4 is a view illustrating an experimental result of measuring the amount of gas, a change in temperature, and a change in composition at front and rear ends of the apparatus for decomposing tar according to the exemplary embodiment of the present invention.

Referring to a table in FIG. 4, in a case in which coal containing a volatile component of 28% is directly used in a melting furnace, tar of 35.6 g per gas of 1 Nm³ is included in the gas ① which is discharged from the melting and gasifying furnace and then inputted into the partial combustion furnace 2. However, after the gas passes through the tar decomposition furnace 6 (②), the amount of tar is greatly decreased to about 0.8 g per gas of 1 Nm³, which shows that the apparatus for decomposing tar according to the present invention effectively decomposes the tar.

In addition, it can be confirmed that in the gas ② after the gas passes through the tar decomposition furnace 6, the amount of CO₂ is increased from 0.67% to 5.74%, the amount of H₂ is increased from 21.3% to 21.87%, the amount of CH₄ is increased from 5.02% to 7.94%, the amount of H₂O is increased from 0.25% to 1.76%, and the amount of NH₃ is increased from 20.11% to 32.97%. The reason is that the carbon component and the hydrogen component in the tar are decomposed into gas components such as CO, CO₂, H₂, H₂O, and CH₄ by oxygen and steam supplied for decomposing the tar. Further, the steam is used to decompose the tar, and as a result, in comparison with an apparatus for manufacturing molten iron (Comparative Example) that uses only oxygen to decompose tar, the amount of produced gas is increased by about 10% even though the same amount of coal is used.

Further, the apparatus for decomposing tar according to the present invention uses the reduced iron as a catalyst to decompose the tar at a temperature lower than a temperature in the related art, and as a result, as shown in the table in FIG. 4, the gas ② discharged from the apparatus for decomposing tar has a temperature of about 775°C, and thus the gas may be supplied directly into the reducing furnace without separately adjusting the temperature thereof.

While this invention has been described in connection with what is presently considered to be practical exemplary embodiments, it is to be understood that the invention is not limited to the disclosed embodiments, but, on the contrary, is intended to cover various modifications and equivalent arrangements included within the spirit and scope of the appended claims.

**<Description of symbols>**

| | |
|---|---|
| 2: Partial combustion furnace | 6: Tar decomposition furnace |
| 8: Uniform-pressure input device | |
| 10, 22: Uniform-pressure discharge device | |
| 20: Reducing furnace | 30: Exhaust heat recovery boiler |
| 40: Melting and gasifying furnace | 50: High-temperature cyclone |

## Claims

1. An apparatus for manufacturing molten iron, the apparatus comprising:
one or more reducing furnaces which manufacture reduced iron by reducing ore;
an input device which inputs coal and the reduced iron discharged from the reducing furnace into a melting and gasifying furnace;
the melting and gasifying furnace which combusts the coal supplied from the input device by using oxygen, and melts the reduced iron by using combustion heat to manufacture molten iron; and
a tar decomposition furnace which is connected to the melting and gasifying furnace, and decomposes a tar component included in gas discharged from the melting and gasifying furnace.

2. The apparatus of claim 1, comprising:
a uniform-pressure input device which is connected to the tar decomposition furnace and inputs high-temperature reduced iron or high-temperature reduced agglomerates into the tar decomposition furnace.

3. The apparatus of claim 1, comprising:
a partial combustion furnace which combusts a part of gas discharged from the melting and gasifying furnace, and inputs the gas into the tar decomposition furnace.

4. The apparatus of claim 1, comprising:
an oxygen blowing conduit which blows oxygen into the partial combustion furnace; and
a steam blowing conduit which blows steam into the partial combustion furnace.

5. The apparatus of claim 4, comprising:
an exhaust heat boiler which is connected to the steam blowing conduit, and manufactures the steam by using sensible heat of exhaust gas discharged from the reducing furnace.

6. The apparatus of claim 1, comprising:
a uniform-pressure discharge device which is connected to the tar decomposition furnace, and discharges high-temperature reduced iron or high-temperature reduced agglomerates from the tar decomposition furnace.

7. The apparatus of claim 1, wherein:
the tar decomposition furnace includes therein a filling layer which is formed of the high-temperature reduced iron or the high-temperature reduced agglomerates inputted by the uniform-pressure input device.

8. The apparatus of claim 2, comprising:
a partial combustion furnace which combusts a part of gas discharged from the melting and gasifying furnace, and inputs the gas into the tar decomposition furnace.

9. The apparatus of claim 8, comprising:
an oxygen blowing conduit which blows oxygen into the partial combustion furnace; and
a steam blowing conduit which blows steam into the partial combustion furnace.

10. The apparatus of claim 9, comprising:
an exhaust heat boiler which manufactures the steam by using sensible heat of exhaust gas discharged from the reducing furnace, and is connected to the steam blowing conduit.

11. The apparatus of claim 2, comprising:
a uniform-pressure discharge device which is connected to the tar decomposition furnace, and discharges high-temperature reduced iron or high-temperature reduced agglomerates from the tar decomposition furnace.

12. The apparatus of claim 2, wherein:
the tar decomposition furnace includes therein a filling layer which is formed of the high-temperature reduced iron or the high-temperature reduced agglomerates inputted by the uniform-pressure input device.

13. The apparatus of claim 10, comprising:
a uniform-pressure discharge device which is connected to the tar decomposition furnace, and discharges high-temperature reduced iron or high-temperature reduced agglomerates from the tar decomposition furnace.

14. The apparatus of claim 13, wherein:
the tar decomposition furnace includes therein a filling layer which is formed of the high-temperature reduced iron or the high-temperature reduced agglomerates inputted by the uniform-pressure input device.

15. The apparatus of claim 14, comprising:
a high-temperature cyclone which separates dust in gas discharged from the melting and gasifying furnace; and
a gas conduit which inputs the gas, from which the dust is separated, into the partial combustion furnace.

16. The apparatus of claim 15, comprising:
a differential pressure meter which is connected to the tar decomposition furnace to monitor a level of pores in the filling layer.

17. The apparatus of claim 16, comprising:
a cooling device which cools the high-temperature reduced iron discharged from the tar decomposition furnace.

18. The apparatus of claim 17, further comprising:
a high-temperature agglomeration device which agglomerates reduced iron discharged from the reducing furnace; and a conveying device which conveys high-temperature reduced agglomerates, which are agglomerated by the high-temperature agglomeration device, to the input device.

19. An apparatus for decomposing tar, the apparatus comprising:
a tar decomposition furnace which includes therein a filling layer formed of high-temperature reduced iron or high-temperature reduced agglomerates, and decomposes a tar component;
a uniform-pressure input device which is connected to the tar decomposition furnace, and inputs the high-temperature reduced iron or the high-temperature reduced agglomerates into the tar decomposition furnace;
a partial combustion furnace which combusts a part of gas, and inputs the gas into the tar decomposition furnace; and
a uniform-pressure discharge device which is connected to the tar decomposition furnace, and discharges high-temperature reduced iron or high-temperature reduced agglomerates from the tar decomposition furnace.

20. The apparatus of claim 19, further comprising:
an oxygen blowing conduit which blows oxygen into the partial combustion furnace; and
a steam blowing conduit which blows steam into the partial combustion furnace.

21. The apparatus of claim 20, further comprising:
an exhaust heat boiler which is connected to the steam blowing conduit, and manufactures the steam by using sensible heat of exhaust gas.

22. A method of manufacturing molten iron, the method comprising:
manufacturing reduced iron by inputting ore into one or more reducing furnaces;
inputting the reduced iron and coal into a melting and gasifying furnace;
manufacturing molten iron by combusting the coal with oxygen and melting the reduced iron with combustion heat;
inputting gas discharged from the melting and gasifying furnace into a tar decomposition furnace; and
decomposing a tar component included in the gas in the tar decomposition furnace.

23. The method of claim 22, wherein:
the decomposing of the tar component includes:
inputting the reduced iron discharged from the reducing furnace and forming a reduced iron filling layer in the tar decomposition furnace; and
effectively decomposing a tar component contained in the gas into reducing gas components by inputting the gas discharged from the melting and gasifying furnace and allowing the gas to pass through the reduced iron filling layer.

24. The method of claim 23, wherein:
a constant volume of the reduced iron filling layer is maintained as an equal amount of reduced iron is continuously supplied into and discharged from the tar decomposition furnace.

25. The method of claim 24, further comprising:
combusting, in a partial combustion furnace, a part of the gas discharged from the melting and gasifying furnace before the inputting of the gas into the tar decomposition furnace.

26. The method of claim 25, further comprising:
blowing oxygen into the partial combustion furnace through an oxygen blowing conduit before the combusting of the part of the gas in the partial combustion furnace; and
blowing steam into the partial combustion furnace through a steam blowing conduit.

27. The method of claim 26, comprising:
adjusting a ratio of oxygen and steam blown into the partial combustion furnace provided in the tar decomposition furnace so that the reducing gas, which is discharged from the tar decomposition furnace when decomposition of tar is completed, is maintained at a temperature of 700 to 800°C.

28. The method of claim 27, wherein:
the steam in the blowing of the steam is manufactured, by an exhaust heat boiler, by using sensible heat of exhaust gas discharged from the reducing furnace.

29. The method of claim 25, wherein:
the decomposing of the tar component includes discharging high-temperature reduced iron or high-temperature reduced agglomerates from the tar decomposition furnace by a uniform-pressure discharge device.

30. The method of claim 29, comprising:
cooling the high-temperature reduced iron discharged from the tar decomposition furnace by a cooling device and inputting the cooled high-temperature reduced iron back into the reducing furnace.

31. The method of claim 30, further comprising:
separating dust in high-temperature reducing gas, which is discharged from the melting and gasifying furnace, by a high-temperature cyclone connected to the melting and gasifying furnace; and
inputting the dust, which is separated by the high-temperature cyclone, back into the melting and gasifying furnace by a dust burner connected to the melting and gasifying furnace.

32. The method of claim 31, further comprising:
supplying a part of the high-temperature reducing gas into the reducing furnace and discharging the remaining part of the high-temperature reducing gas to the outside in order to maintain a pressure in the melting and gasifying furnace.

33. The method of claim 32, further comprising:
agglomerating reduced iron, which is discharged from the reducing furnace, by a high-temperature agglomeration device connected to the reducing furnace after the manufacturing of the reduced iron; and
conveying high-temperature reduced agglomerates agglomerated by the high-temperature agglomeration device to the melting and gasifying furnace by a conveying device.
